# EUROPEAN PATENT SPECIFICATION

(11) **EP 2 935 949 B1**
(45) Date of publication and mention of the grant of the patent: **06.03.2019**
(21) Application number: 13863891.1
(22) Date of filing: 18.12.2013
(51) Int. Cl.: F16J 15/10, H05B 7/12, F27B 3/10, F27D 99/00

(54) **SEALING DEVICE**
DICHTUNGSVORRICHTUNG
DISPOSITIF D'ÉTANCHÉITÉ

(30) Priority: 20.12.2012 FI 20126339
(43) Date of publication of application: 28.10.2015
(73) Proprietor: Outotec (Finland) Oy, 02230 Espoo (FI)
(72) Inventor: OLLILA, Janne, 02820 Espoo (FI); KERÄNEN, Tapio, 02110 Espoo (FI)
(74) Representative: Papula Oy
(86) International application number: PCT/FI2013/051179
(87) International publication number: WO 2014/096543

(56) References cited:
- EP-A1- 0 443 201
- US-A- 3 471 137
- US-A- 3 751 219
- US-A- 4 759 032

## Description

### FIELD OF THE INVENTION

The present invention relates to a sealing device for sealing an annular gap in connection with structures of a pyrometallurgical furnace.

### BACKGROUND OF THE INVENTION

In prior art there are known a variety of pyrometallurgical furnaces. These include electric furnaces, suspension smelting furnaces such as flash smelting furnaces or flash converting furnaces, Ausmelt furnaces, Kaldo furnaces, anode furnaces, indurating furnaces, selenium roasting furnaces, slag cleaning furnaces, smelt reduction vessels, steel belt sintering furnaces and TROF converters.

An electric arc furnace is an electrically operated furnace used for melting metal and/or for cleaning slag. The operation of the furnace is based on an arc flame that burns either between separate electrodes, or between electrodes and the material to be melted. The furnace may be operated either by AC or DC current. Heat is created in the arc flame, and also in the material to be melted, in case the arc flame burns between the material and the electrodes. Power is conducted to vertical electrodes that are located symmetrically in a triangle with respect to the midpoint of the furnace. The assembly depth of the electrodes in the furnace is continuously adjusted, because they are worn at the tips owing to the arc flame.

The electrodes extend into the furnace via through holes located in the furnace roof. The diameter of a through hole is larger than the diameter of an electrode, in order to ensure free motion of the electrode, and in order to avoid contact between the electrode and the roof. The gap left between the electrode and the roof aperture must be sealed in order to prevent the access of gases from inside the furnace through the aperture to the atmosphere, and on the other hand in order to prevent the access of air from the atmosphere to the furnace.

In the prior art there are known sealing devices for sealing the gap between the electrode and the roof aperture by mechanical sealings, for instance by graphite rings, graphite rope seals etc. that are hydraulically pressed against the electrode. Various mechanical sealing arrangements are known for example from the publications FI 81197, FI 64458, DE 1540876,
and SE 445744. The hydraulic medium used for creating hydraulic compression between the graphite rings and the rope sealings is water. Further, WO 2011/015712 A1 proposes using of inert gas as a pressurizing medium instead of water. WO 2009/147302 A1 proposes a slit nozzle encasing the electrode and discharging the gas jet in a direction that is at an angle with respect to the horizontal plane and has a slightly upwards inclined orientation pointed outwardly. The sealing is carried out owing to the effect of the created stagnation pressure. Publication US 3 471 137 A describes a sealing tube for an annealing furnace, whereby the sealing is filled with ceramic material.

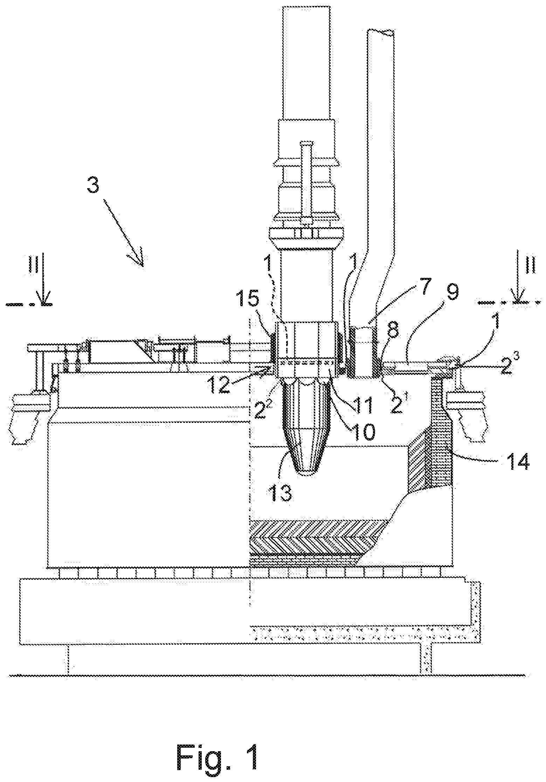

A sealing device similar to the above-mentioned sealing devices can be seen in the schematic illustration of Figure 1 denoted with reference number 15.

However, there are still other annular gaps in connection with the roof of the electric arc furnace that need to be sealed.
An annular gap that needs to be sealed is located in the lower electrode column assembly. The lower electrode column assembly comprises a contact shoe ring and a pressure ring. The contact shoe ring consists of a plurality of contact shoes arranged as a ring to be in contact with a steel mantle inside which the electrode paste is sintered. Such an electrode is a so-called Söderberg electrode. The contact shoes conduct electric current to the electrode. The contact shoes are pressed against the steel mantle of the electrode with the aid of a plurality of bellows arranged in the pressure ring that surrounds the electrode shoe ring. The annular gap that needs to be sealed is located between the pressure ring and the contact shoe ring.

Another annular gap which needs to be sealed is between an outer periphery of a charging tube of the electric arc furnace and the periphery of a charging opening in the roof of the electric arc furnace.

Still another annular gap that needs to be sealed is the gap between the roof and the wall structure of the electric arc furnace.

Several attempts to seal the above-mentioned different kinds of gaps have been made. Castable refractory mass, such as ceramic mass, has been cast to seal the gaps. The problem is that after being cured the ceramic mass is not elastic, but instead is hard and brittle. Therefore, the ceramic mass tends to decay and break under the influence of movements of the structures in relation to each other, such movements being caused by forces induced by thermal stresses. After breakage of the ceramic mass, maintenance is needed. The remains of broken mass have to be removed and the casting of the new ceramic mass has to be done.

Further, refractory mineral wool has been stuffed into the gaps. However, the problem is that the mineral wool is very light material which tends either to blow off from the gap in a situation where an overpressure shock occurs inside the furnace, or it may easily fall inside the furnace as the gap widens. Then maintenance is needed to reinstall the mineral wool sealing into the gap.

### OBJECTIVE OF THE INVENTION

It is an objective of the present invention to provide a sealing device for sealing an annular gap in connection with structures of a pyrometallurgical furnace, so that the sealing device is able to adapt to variations in the width of the gap, is able to stay stationary and functioning in its place despite pressure shocks, and is able to stay intact despite mutual movements of the structures between which the sealing device is placed.

It is also an objective of the present invention to provide a sealing device which simplifies and reduces maintenance work.

### SUMMARY OF THE INVENTION

According to an aspect, the present invention provides a sealing device for sealing an annular gap in connection with structures of a pyrometallurgical furnace, in order to isolate an inner atmosphere of the pyrometallurgical furnace from the atmosphere residing outside the pyrometallurgical furnace for preventing any gas leakage to and from the furnace. According to the invention the sealing device comprises a tube of refractory fabric, which tube is filled with granular refractory material and placed to cover the annular gap.

The granular refractory material is preferably chosen so that that its particle size is fine to prevent propagation of gas through the mass of particles. The particle size is preferably 0-2 mm. The refractory fabric tube is filled so loosely that it allows movement of the particles past one another so that bending of the tube and lateral form adaptation to different forms and variations of the width of the gap is possible. The tube stays stationary because of the weight of the filled tube. It stays in its place in the gap providing effective gas-sealing despite pressure shocks that may occur. The sealing device adapts its form to mutual movements of the structures between which the sealing device is placed. The sealing device is also easy to be removed from the gap to enable maintenance.

In an embodiment of the sealing device, the sealing device comprises a refractory support device which is placed to cover the annular gap, and the tube of refractory fabric filled with granular refractory material is placed on the refractory support device.

In an embodiment of the sealing device, the refractory support device is a refractory felt.

In an embodiment of the sealing device, the sealing device comprises two or more tubes.

In an embodiment of the sealing device, the refractory material of the tube is ceramic fabric or quartz fiber fabric or alike.

In an embodiment of the sealing device, the refractory felt is ceramic felt.

In an embodiment of the sealing device, the granular refractory material is antimagnetic and dielectric dry sand, such as sandblasting sand, or alike. The sand must have a particle size of the order of 0-2 mm and it must be washed. The sand must be dielectric: its iron and alkane contents must be low, i.e. total Fe + alkane contents must be less than 2 %.

According to a second aspect, the present invention provides use of the sealing device to seal an annular gap in an electric furnace, suspension smelting furnace such as flash smelting furnace or flash converting furnace, Ausmelt furnace, Kaldo furnace, anode furnace, indurating furnace, selenium roasting furnace, slag cleaning furnace, smelt reduction vessel, steel belt sintering furnace or TROF converter.

In an embodiment of the use, the annular gap may be the gap between an outer periphery of a charging tube of the electric arc furnace and the periphery of a charging opening in the roof of the electric arc furnace.

In an embodiment of the use, the annular gap is the gap between an outer periphery of a contact shoe ring and an inner periphery of a pressure ring which surrounds the contact shoe ring in a lower column of an electrode in an electric arc furnace.

In an embodiment of the use, the annular gap is the gap between the roof and the wall structure of the electric arc furnace.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is a schematic elevation side view of an electric arc furnace,
Figure 2 is a top view II-II from Figure 1,
Figure 3 shows an elevation view of the roof of the electric arc furnace showing part of the electrode lower column and the charging tube equipped with sealing devices of the invention,
Figure 4 is an axonometric view of the electrode lower column assembly including the contact shoe ring and the pressure ring,
Figure 5 is a top view of the lower electrode column assembly of Figure 4,
Figure 6 schematically shows three tubes filled with refractory granular material placed in a ring form,
Figure 7 shows the lower electrode column assembly of Figure 5 wherein the tubes of Figure 6 are placed in the gap between the pressure ring and the contact shoe ring,
Figure 8 shows a section taken along line VIII-VIII in Figure 7,
Figure 9 shows a section taken along line IX-IX in Figure 7, and
Figure 10 shows a section taken along line X-X in Figure 7.

### DETAILED DESCRIPTION OF THE INVENTION

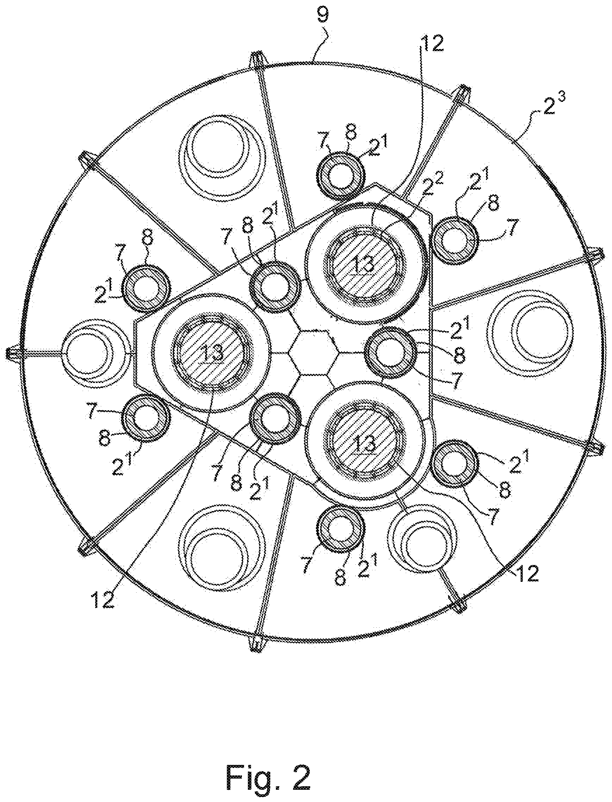

Figure 1 shows a schematic illustration of an electric arc furnace 3. In Figure 1, only one of the three electrodes 13 and only one of the several charging tubes 7 is shown for the sake of simplicity. The top view of Figure 2 shows all the three electrodes 13 and the nine charging tubes 7.

Figures 1 - 3, 5, 7 and 11 show the different annular gaps 2¹, 2², 2³ that can be sealed with the sealing device 1 of the invention to isolate the inner furnace atmosphere from the air atmosphere of the surroundings of the electric arc furnace, for preventing gas leakages to and from the furnace. The inner atmosphere of the electric arc furnace includes dust and CO gas at high temperature. Leakage of CO gas is a serious safety hazard and must be effectively prevented.

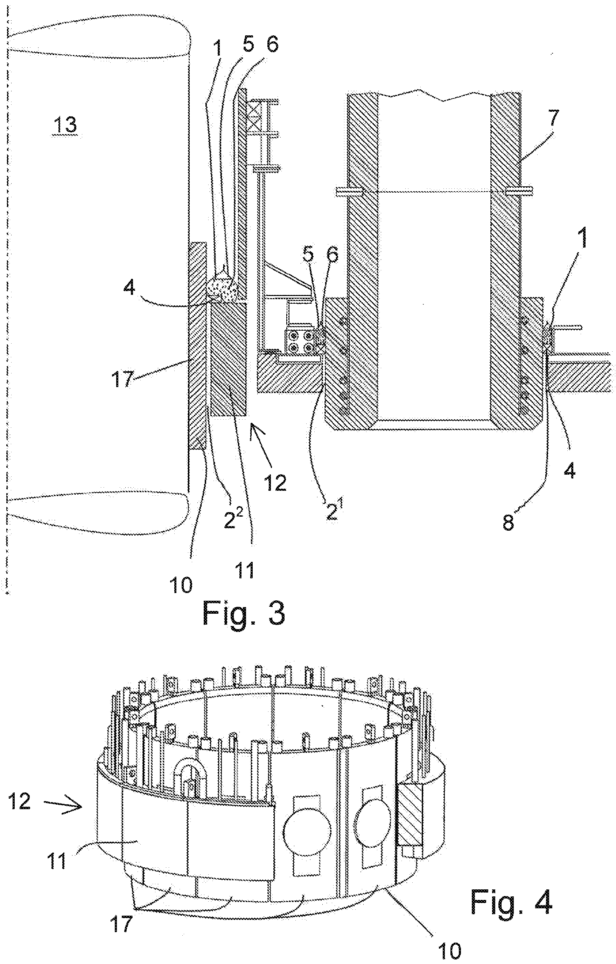

With reference to Figures 3, 6, and 7-11, the sealing device 1 comprises a refractory felt 4 which is placed to cover the annular gap 2¹, 2², 2³, and at least one tube 5 of refractory fabric. The refractory fabric tube 5 is filled with granular refractory material 6 and placed on the refractory felt 4 in the gap 2¹, 2², 2³. The refractory felt 4 is ceramic felt.

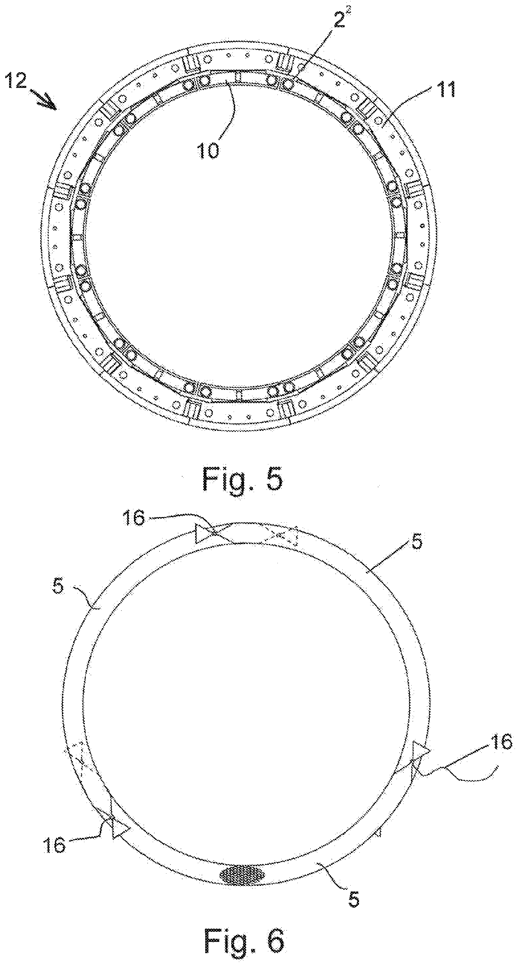

As can be seen in Figure 6, the sealing device 1 may comprise two or more tubes 5. At their end regions the tubes 5 may be placed partially on top of each other so that the tubes partially overlap each other. The refractory fabric tube 5 is filled with granular refractory material 6 so loosely that bending of the tube 5 is allowed and also to allow the mutual movement of the particles to allow lateral forming of the tube 5 so that it may adapt to different widths of the gap in different places along the length of the tube. The refractory material of the tube 5 is ceramic fabric or quartz fiber fabric. The granular refractory material 6 inside the tube 5 is antimagnetic and dielectric dry sand, such as sandblasting sand. As shown in Figure 6, the ends of the tube 5 may be closed by a ceramic rope 16.

With reference to Figures 1, 2 and 3, a first annular gap 2¹ which can be sealed by the sealing device 1 of the invention is between an outer periphery of a charging tube 7 and the periphery of a charging opening 8 in the roof 9 of the electric arc furnace 3. As can be best seen in Figure 3, the refractory felt 4 covers the first annular gap 2¹, and a tube 5 of refractory fabric filled with granular refractory material 6 is placed on the refractory felt 4 in the first annular gap 2¹. The roof 9 and the charging tube 7 may move in relation to each other because they are supported to different structures and because of thermal stresses. The fabric tube 5 filled with granular material 6 is flexible so that its form adapts to these movements, maintaining its sealing ability.

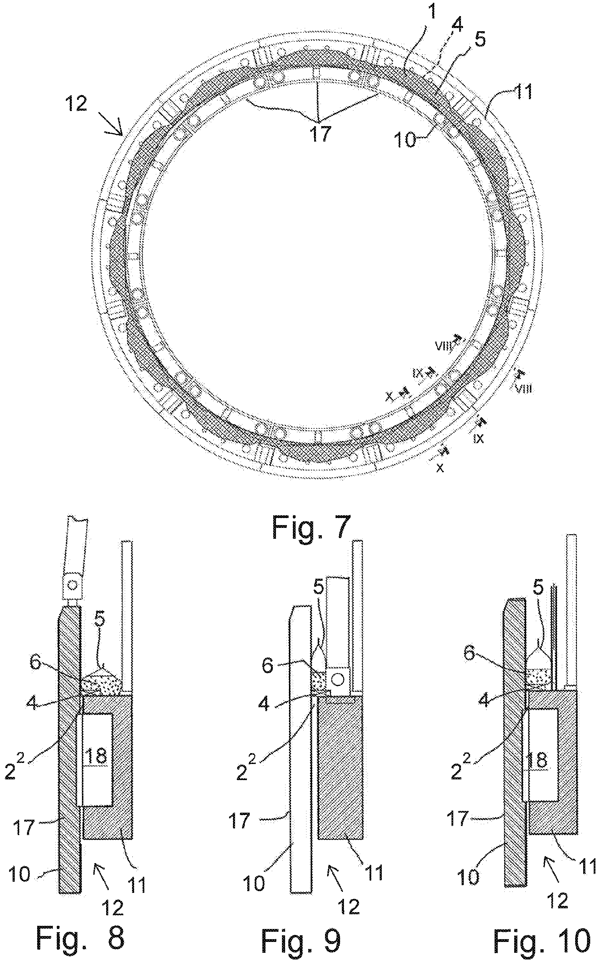

With reference to Figures 1 to 10, a second annular gap 2² which can be sealed by the sealing device 1 of the invention is located in the lower electrode column assembly 12. The lower electrode column assembly 12 comprises a contact shoe ring 10 which consists of a plurality of contact shoes 17 arranged in a ring form to be in contact with a steel mantle inside which the electrode 13 is. The contact shoes 17 conduct electric current to the electrode 13. The contact shoes 17 are pressed against the steel mantle of the electrode with the aid of a plurality of bellows 18 (see Figures 8 and 10) arranged in the pressure ring 11 that surrounds the electrode shoe ring 10. As seen in Figures 3, 5 and 8 - 10, the second annular gap 2² to be sealed by the sealing device 1 is between the pressure ring 11 and the contact shoe ring 10.

As best seen in Figures 3, 5-10, the sealing device 1 for sealing of the second annular gap 2² comprises a refractory felt 4 which is placed to cover the second annular gap 2², and at least one, in the shown embodiment three, tubes 5 of refractory fabric. The refractory fabric tubes 5 are filled with granular refractory material 6 and placed on the refractory felt 4 in the second gap 2². The refractory felt 4 is ceramic felt.

Figure 7 and its sections in Figures 8 - 10 illustrate that the tube 5 filled with granular material 6 is very flexible and inherently adapts to different widths of the second gap.

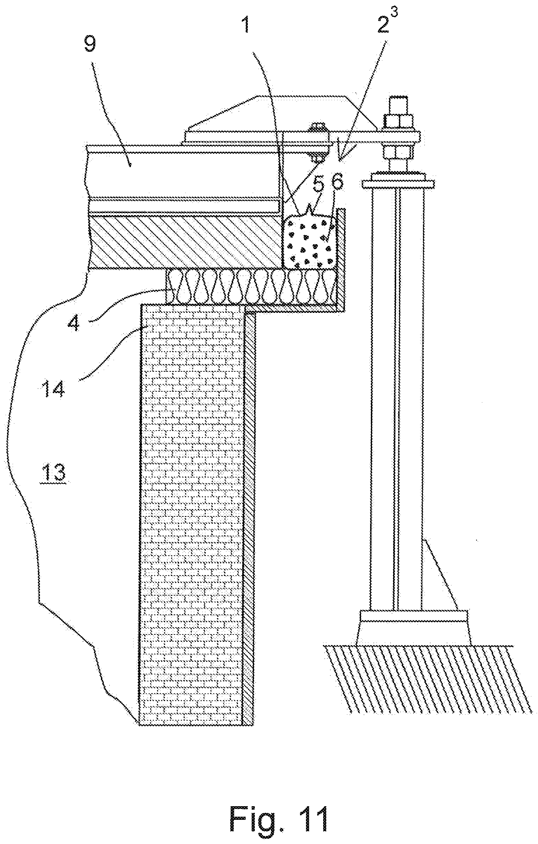

With reference to Figures 1 and 11 a third annular gap 2³ which can be sealed by the sealing device 1 of the invention is the annular gap 2³ between the roof 9 and the wall structure 14 of the electric arc furnace 13. Again, the sealing device 1 comprises a refractory felt 4 which is placed to cover the annular gap 2³, and a tube 5 of refractory fabric, which tube is filled with granular refractory material 6, is placed on the refractory felt 4.

While the present invention has been described in connection with a number of exemplary embodiments and implementations in connection with an electric arc furnace, the present invention is not limited to be used merely in connection with electric arc furnaces. The sealing device of the invention can as well be utilized in connection with any pyrometallurgical furnace to seal an annular gap for isolating the inner atmosphere of the furnace from the atmosphere residing outside the furnace, for preventing a gas leakage to and from the furnace. The pyrometallurgical furnace can be an electric furnace, suspension smelting furnace such as flash smelting furnace or flash converting furnace, Ausmelt furnace, Kaldo furnace, anode furnace, indurating furnace, selenium roasting furnace, slag cleaning furnace, smelt reduction vessel, steel belt sintering furnace or TROF converter.

Above, the invention has been described by way of examples with reference to the exemplifying embodiments illustrated in the accompanying drawings. The invention is, however, not confined to the exemplifying embodiments shown in the drawings alone, but the invention may vary within the scope of the inventive idea defined in the accompanying claims.

## Claims

1. A sealing device (1) for sealing an annular gap (2¹, 2², 2³) in connection with structures of a pyrometallurgical furnace (3) to isolate an inner atmosphere of the furnace from the atmosphere residing outside the furnace, for preventing a gas leakage to and from the furnace, the sealing device (1) comprising a tube (5) of refractory fabric, **characterized in that** the tube (5) is filled with granular refractory material (6) and placed to cover the annular gap (2¹, 2², 2³).

2. The sealing device according to claim 1, **characterized in that** the sealing device (1) comprises a refractory support device (4) which is placed to cover the annular gap (2¹, 2², 2³), and the tube (5) is placed on the refractory support device (4).

3. The sealing device according to claim 1 or 2, **characterized in that** the refractory support device (4) is a refractory felt.

4. The sealing device according to any one of claims 1 to 3, **characterized in that** the sealing device (1) comprises two or more tubes (5).

5. The sealing device according to any one of claims 1 to 4, **characterized in that** the refractory material of the tube (5) is ceramic fabric or quartz fiber fabric, or alike.

6. The sealing device according to any one of claims 1 to 5, **characterized in that** the refractory felt (4) is ceramic felt.

7. The sealing device according to any one of claims 1 to 6, **characterized in that** the granular refractory material (6) is antimagnetic and dielectric dry sand, such as sandblasting sand, or alike.

8. Use of the sealing device according to any one of the claims 1 to 7 to seal an annular gap in an electric furnace, suspension smelting furnace such as flash smelting furnace or flash converting furnace, Ausmelt furnace, Kaldo furnace, anode furnace, indurating furnace, selenium roasting furnace, slag cleaning furnace, smelt reduction vessel, steel belt sintering furnace or TROF converter.

9. The use of the sealing device according to claim 8, **characterized in that** the annular gap is the first gap (2¹) between an outer periphery of a charging tube (7) of the electric arc furnace (3) and the periphery of a charging opening (8) in the roof (9) of the electric arc furnace.

10. The use of the sealing device according to claim 8, **characterized in that** the annular gap is the second gap (2²) between an outer periphery of a contact shoe ring (10) and an inner periphery of a pressure ring (11) which surrounds the contact shoe ring in a lower column assembly (12) of an electrode (13) in an electric arc furnace (3).

11. The use of the sealing device according to claim 8, **characterized in that** the annular gap is the third gap (2³) between the roof (9) and the wall structure (14) of the electric arc furnace.

## Patentansprüche

1. Dichtungsvorrichtung (1) zum Abdichten eines ringförmigen Spalts (2¹, 2², 2³) in Verbindung mit Strukturen eines pyrometallurgischen Ofens (3), um eine innere Atmosphäre des Ofens von der Atmosphäre zu isolieren, die sich außerhalb des Ofens befindet, zum Verhindern eines Gasdurchsickerns in den und aus dem Ofen, wobei die Dichtungsvorrichtung (1) ein Rohr (5) aus feuerfestem Gewebe umfasst, **dadurch gekennzeichnet, dass** das Rohr (5) mit einem granulären feuerfesten Material (6) gefüllt ist und angeordnet ist, um den ringförmigen Spalt (2¹, 2², 2³) zu bedecken.

2. Dichtungsvorrichtung nach Anspruch 1, **dadurch gekennzeichnet, dass** die Dichtungsvorrichtung (1) eine feuerfeste Stützvorrichtung (4) umfasst, die angeordnet ist, um den ringförmigen Spalt (2¹, 2², 2³) zu bedecken, und das Rohr (5) auf der feuerfesten Stützvorrichtung (4) angeordnet ist.

3. Dichtungsvorrichtung nach Anspruch 1 oder 2, **dadurch gekennzeichnet, dass** die feuerfeste Stützvorrichtung (4) ein feuerfester Filz ist.

4. Dichtungsvorrichtung nach einem der Ansprüche 1 bis 3, **dadurch gekennzeichnet, dass** die Dichtungsvorrichtung (1) zwei oder mehr Rohre (5) umfasst.

5. Dichtungsvorrichtung nach einem der Ansprüche 1 bis 4, **dadurch gekennzeichnet, dass** das feuerfeste Material des Rohrs (5) keramisches Gewebe oder Quarzfasergewebe oder Ähnliches ist.

6. Dichtungsvorrichtung nach einem der Ansprüche 1 bis 5, **dadurch gekennzeichnet, dass** der feuerfeste Filz (4) keramischer Filz ist.

7. Dichtungsvorrichtung nach einem der Ansprüche 1 bis 6, **dadurch gekennzeichnet, dass** das granuläre feuerfeste Material (6) antimagnetischer und dielektrischer trockener Sand wie z. B. Sandstrahlsand oder Ähnliches ist.

8. Verwendung der Dichtungsvorrichtung nach einem der Ansprüche 1 bis 7, um einen ringförmigen Spalt in einem elektrischen Ofen, einem Suspensionsschmelzofen wie z. B. einem Schwebeschmelzofen oder Schwebekonvertierungsofen, einem Ausmelt-Ofen, Kaldo-Ofen, Anodenofen, Härtungsofen, Selenkalzinierofen, Schlackereinigungsofen, einem Schmelzreduktionsgefäß, einem Stahlbandsinterofen oder einem TROF-Konverter abzudichten.

9. Verwendung der Dichtungsvorrichtung nach Anspruch 8, **dadurch gekennzeichnet, dass** der ringförmige Spalt der erste Spalt (2¹) zwischen einem äußeren Umfang eines Beschickungsrohrs (7) des Elektrolichtbogenofens (3) und dem Umfang einer Beschickungsöffnung (8) im Dach (9) des Elektrolichtbogenofens ist.

10. Verwendung der Dichtungsvorrichtung nach Anspruch 8, **dadurch gekennzeichnet, dass** der ringförmige Spalt der zweite Spalt (2²) zwischen einem äußeren Umfang eines Kontaktschuhrings (10) und einem inneren Umfang eines Druckrings (11) ist, der den Kontaktschuhring in einer unteren Säulenanordnung (12) einer Elektrode (13) in einem Elektrolichtbogenofen (3) umgibt.

11. Verwendung der Dichtungsvorrichtung nach Anspruch 8, **dadurch gekennzeichnet, dass** der ringförmige Spalt der dritte Spalt (2³) zwischen dem Dach (9) und der Wandstruktur (14) des Elektrolichtbogenofens ist.

## Revendications

1. Dispositif d'étanchéité (1) pour rendre étanche un espace annulaire (2¹, 2², 2³) en connexion avec des structures d'un four pyrométallurgique (3) afin d'isoler une atmosphère interne du four de l'atmosphère se trouvant en dehors du four, pour prévenir une fuite de gaz en direction et en provenance du four, le dispositif d'étanchéité (1) comprenant un tube (5) en tissu réfractaire, **caractérisé en ce que** le tube (5) est rempli d'un matériau réfractaire granulaire (6) et placé de façon à couvrir l'espace annulaire (2¹, 2², 2³) .

2. Dispositif d'étanchéité selon la revendication 1, **caractérisé en ce que** le dispositif d'étanchéité (1) comprend un dispositif de support réfractaire (4) qui est placé de façon à couvrir l'espace annulaire (2¹, 2², 2³), et le tube (5) est placé sur le dispositif de support réfractaire (4).

3. Dispositif d'étanchéité selon la revendication 1 ou 2, **caractérisé en ce que** le dispositif de support réfractaire (4) est un feutre réfractaire.

4. Dispositif d'étanchéité selon l'une quelconque des revendications 1 à 3, **caractérisé en ce que** le dispositif d'étanchéité (1) comprend deux tubes (5) ou plus.

5. Dispositif d'étanchéité selon l'une quelconque des revendications 1 à 4, **caractérisé en ce que** le matériau réfractaire du tube (5) est du tissu céramique ou du tissu en fibre de quartz, ou similaire.

6. Dispositif d'étanchéité selon l'une quelconque des revendications 1 à 5, **caractérisé en ce que** le feutre réfractaire (4) est du feutre céramique.

7. Dispositif d'étanchéité selon l'une quelconque des revendications 1 à 6, **caractérisé en ce que** le matériau réfractaire granulaire (6) est du sable sec antimagnétique et diélectrique, tel que du sable de décapage, ou similaire.

8. Utilisation du dispositif d'étanchéité selon l'une quelconque des revendications 1 à 7 pour rendre étanche un espace annulaire dans un four électrique, un four de fusion de suspension tel qu'un four de fusion éclair ou un four de conversion éclair, un four Ausmelt, un four Kaldo, un four à anode, un four de durcissement, un four de grillage de sélénium, un four de nettoyage de laitier, une cuve de réduction de fusion, un four de frittage à bande d'acier ou un convertisseur TROF.

9. Utilisation du dispositif d'étanchéité selon la revendication 8, **caractérisée en ce que** l'espace annulaire est le premier espace (2¹) entre une périphérie externe d'un tube de chargement (7) du four à arc électrique (3) et la périphérie d'une ouverture de chargement (8) dans le toit (9) du four à arc électrique.

10. Utilisation du dispositif d'étanchéité selon la revendication 8, **caractérisée en ce que** l'espace annulaire est le deuxième espace (2²) entre une périphérie externe d'un anneau à patin de contact (10) et une périphérie interne d'un anneau de pression (11) qui entoure l'anneau à patin de contact dans un ensemble colonne inférieur (12) d'une électrode (13) dans un four à arc électrique (3).

11. Utilisation du dispositif d'étanchéité selon la revendication 8, **caractérisé en ce que** l'espace annulaire est le troisième espace (2³) entre le toit (9) et la structure de paroi (14) du four à arc électrique.
